# EUROPEAN PATENT APPLICATION

(11) **EP 1 183 935 A1**
(43) Date of publication of application: **06.03.2002**
(21) Application number: 01307460.4
(22) Date of filing: 03.09.2001
(51) Int. Cl.: A01D 34/68, A01D 34/47

(54) **Grass cutting machine incorporating a vacuum actuator**

(30) Priority: 01.09.2000 GB 0021478
(71) Applicant: Ransomes Jacobsen Limited, Ipswich, Suffolk IP3 9QG (GB)
(72) Inventor: Walker, Alan, Ipswich, Suffolk IP5 2EE (GB); French, James, Holland on Sea, Essex CO15 4ST (GB)
(74) Representative: Moir, Michael Christopher

(57) **Abstract**

A grass-cutting machine comprising an internal combustion engine (16), and clutch means (18) for selectively connecting the engine (16) to at least one driven element of the machine, characterised by means for operating the clutch means (18) using a partial vacuum generated in the induction flow path (50) of the engine (16). The partial vacuum may be used alternatively or in addition to effect other control functions of the machine.

## Description

This invention relates to a grass-cutting machine powered by an internal combustion engine, particularly but not exclusively a pedestrian-controlled cylinder or rotary lawnmower.

Current safety regulations for lawnmowers and other grass-cutting machines require the provision of operator-presence-sensitive controls so that the machine cannot cut and/or move without the operator having hands-on control of the machine. In known mowers with operator-presence-sensitive control a normally-disengaged clutch between the engine and the cutter is engaged mechanically by the operator pulling (and keeping pulled against the spring force of the clutch) a lever similar to those used for bicycle brakes. Holding the lever against the spring force for long periods can lead to operator fatigue and a temptation to adopt improper working practices such as tying or taping the lever in its pulled position.

The preferred embodiment of the present invention seeks to avoid this problem by providing an operator-presence-sensitive control which is more operator-friendly.

The invention provides a grass-cutting machine comprising an internal combustion engine, and clutch means for selectively connecting the engine to at least one driven element of the machine, characterised by means for operating the clutch means using a partial vacuum generated in the induction flow path of the engine, preferably the inlet manifold.

Preferably (and especially for operator-presence-sensitive machines), the clutch is normally disengaged. The at least one driven element may comprise grass-cutting means of the machine.

Alternatively or in addition the at least one driven element comprises ground wheels and/or a roller of the machine.

The same clutch may be used to connect the engine to the grass-cutting means and to the wheels and/or roller.

There may be a pneumatic actuator for mechanically actuating the clutch means, and a valve for connecting the actuator either to the partial vacuum or to atmosphere.

There may be means for utilising the partial vacuum gradually to achieve smooth engagement of the clutch means.

Thus, there may be a restrictor to cause gradual application of the partial vacuum to the pneumatic actuator.

The valve may be biased to a position in which it connects the actuator to atmosphere, and there may be operator-actuated means for moving the valve to a further position in which it connects the actuator to the partial vacuum.

There may be two said valves with respective operator manually-actuated means positioned to permit an operator of the machine to operate the valves separately, with each hand.

There may be two said actuators arranged to activate the clutch means in parallel with each other, each controlled by a respective one of the said two valves.

When the grass-cutting machine is a lawnmower, the operator actuated means may be positioned on a handlebar of the machine. Such lawnmowers generally are controlled by an operator walking behind the machine, but a large one may have a seat for the operator mounted on a trailing roller which is pivotally connected to the mower and towed by it.

In its broadest aspect the invention is a grass-cutting machine comprising an internal combustion engine, means for obtaining a partial vacuum from the induction flow path of the engine, and means for utilising the partial vacuum to effect a control function during operation of the machine.

The control function may be for example engagement or disengagement of a clutch as set forth above, or the control of the engine throttle.

There may be a pneumatic actuator arranged to move the engine throttle between two fixed positions.

The invention now will be described merely by way of example, with reference to the accompanying drawings, wherein;
Figures 1 and 2 show a prototype lawnmower according to the invention;

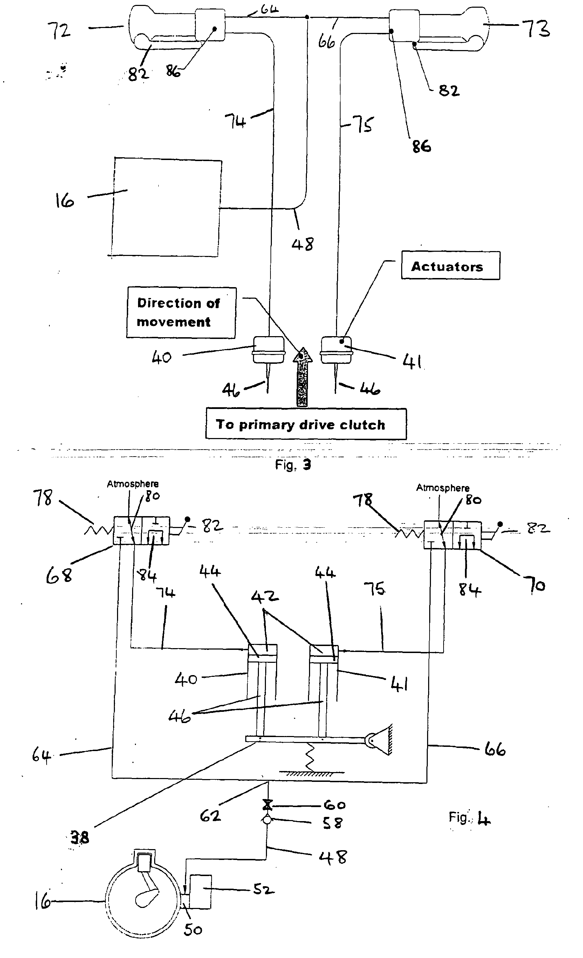

Figures 3 and 4 are schematic representations of the relevant parts of the lawnmower of figures 1 and 2; and
Figure 5 shows another embodiment of the invention.

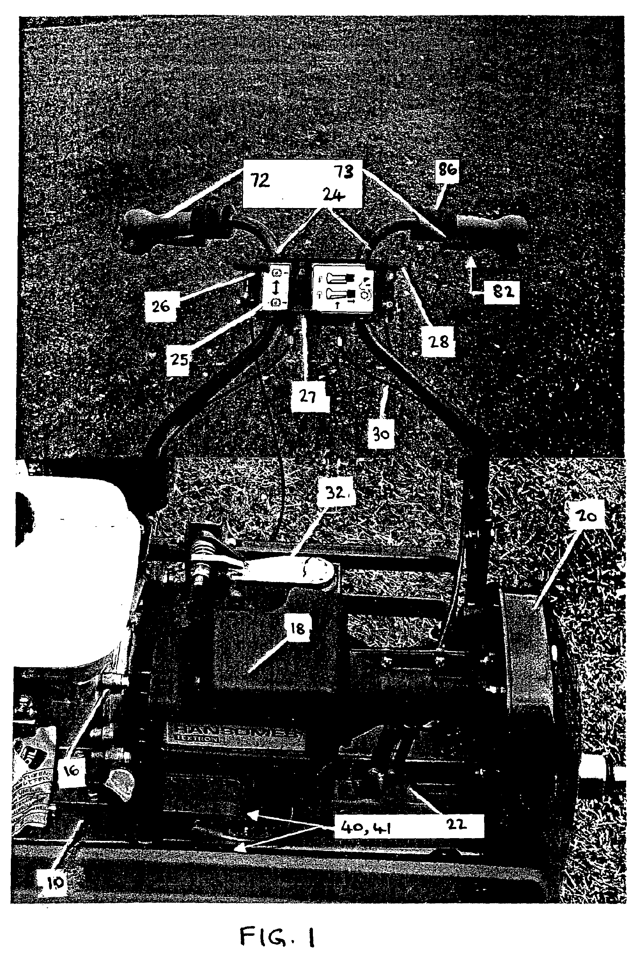

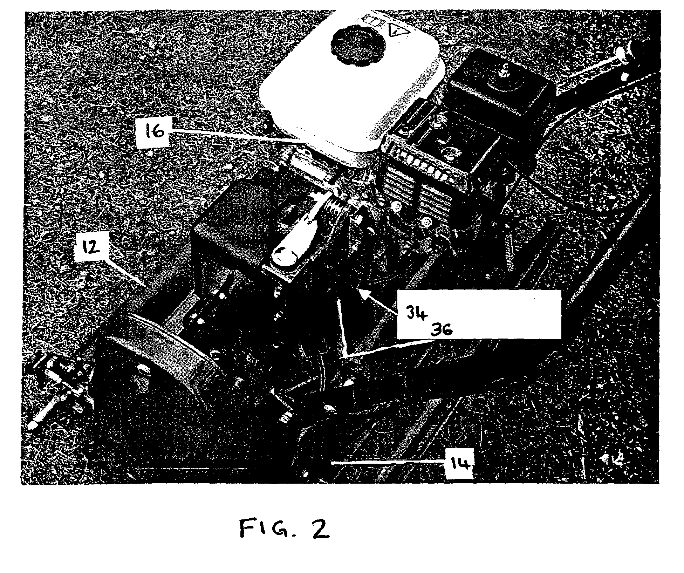

Referring to figures 1 and 2, a walk-behind pedestrian-controlled lawnmower of the well-known cylinder type comprises chassis 10 carried by a front supporting idler roller 12, and by a larger drive rear roller parallel to the front roller. The rear roller is disposed beneath a casing 14 and thus not visible in the figures. Between the rollers and also parallel thereto in a cylindrical cutting reel which cooperates with a stationary bottom blade to cut the grass by a shearing action. This arrangement is well-known per se and it is not necessary to describe these features further here.

A petrol (gasoline) internal combustion engine 16 is mounted with its crankshaft horizontal and parallel to the roller and cutter axes. The engine is connected via a clutch 18 to an output shaft which via a chain drive in a chain case 20 drives the rear roller and the cutting reel. A further normally-engaged clutch, (hereafter the "cutter clutch"), an operating lever 22 of which can be seen protruding through the casing 14 is provided for disengaging the cutting reel from the drive whilst leaving the rear roller driven so that the mower may be motored eg. along pathways between areas of grass to be cut without the cutting reel rotating.

The mower has hollow handlebars 24, conventional per se, by which the machine is steered by an operator walking behind it. Convenient to the operator in a console 25 are placed an engine throttle control 26, a parking brake handle 27 (the parking brake acts on the rear roller) and an operating lever 28 for the cutter clutch, connected by a Bowden cable 30 to the lever 22. The throttle control and the parking brake also are operated via cables, as known per se.

The main clutch 18 is of a conventional mechanically-operated type, actuated by an external pivoted lever 32 acting via a fork on a thrust bearing, as known per se. The clutch is arranged so that its internal springs bias it to a disengaged position. Moving the lever 32 compresses the clutch spring and brings the driving and driven plate together.

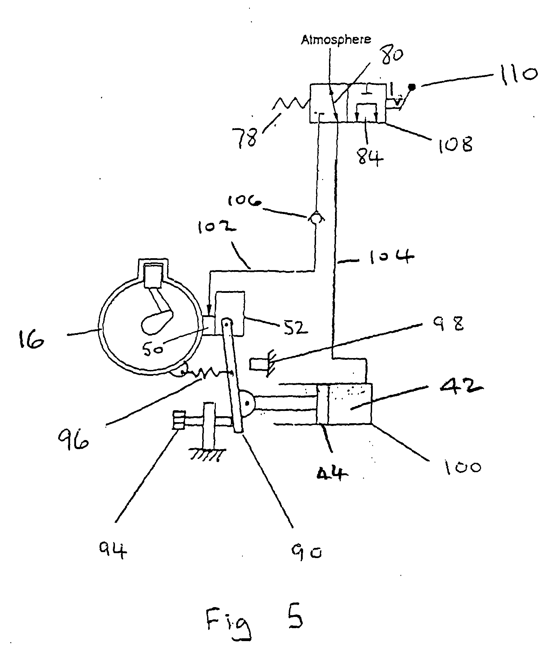

The lever 32 is in turn operated by a lever 34 connected via a pull-rod 36 to a further pivoted lever 38 (figure 4) to which are connected a pair of pneumatic actuators 40, 41. Each of these consists of an airtight capsule 42 one end of which is bounded by a flexible diaphragm 44. Reducing the pressure in the canister causes the diaphragm to deflect and this deflection is communicated to the lever 38 by a pull-rod 46.

A vacuum line 48 is taken from a drilling in an insulator block 50 forming part of the inlet manifold of the engine 16, on which the carburettor 52 of the engine is mounted from the cylinder block (this is shown only schematically in figure 4).

The line 48 is taken (conveniently through the interior of the hollow handle 24) via a non-return valve 58 and flow restrictor 60 to a T-piece 62 in the console 25, where it divides into two. Thence the branches 64, 66 of the divided vacuum line are taken respectively to one of a pair of valves 68, 70. One valve 68, 70 is located in each of the hand grips 72, 73 of the handlebars. From the valves 68, 70 respective vacuum lines 74, 75 are taken internally of the tubular handles to the pneumatic actuators 40, 41.

Each valve 68, 70 has a spool which is biased by a spring 78 to a first position in which the line 74, 75 is connected by a first path 80 through the spool to atmosphere, thereby venting the canisters 40, 41. In this condition the clutch 18 is disengaged.

Each valve spool is moveable by a hand-operated pivoted lever 82 to a second position in which a second path 84 through the spool connects the line 74 or 75 to the vacuum line 64, 66 and thence to the engine inlet manifold. In operation, the suction in the inlet manifold creates a partial vacuum in the canister 42 of one or both of the actuators 40, 41. The actuator diaphragm is deflected, moving the lever 32 via the linkage 34, 36, 38, 46, thereby engaging the drive to the rear roller and if the cutter clutch is engaged, also to the cutting reel. The flow restrictor 60 prevents the partial vacuum in the canister 42 being generated or dissipated too abruptly, so that the clutch 18 engages and disengages gradually. Abrupt engagement could result in the mower lurching forward with the front roller and cutting reel lifted from the ground by torque reaction. This automatically-achieved gradual take-up of the drive is particularly advantageous when mowing fine grass surfaces such as bowling greens or golf putting surfaces, where damage must be avoided.

The lever 82 requires only a very small effort by the operator to move it, and can be held against the force of the spring 78 without fatigue. To prevent inadvertent operation, the lever 82 is baulked by a spring-loaded collar 86 which the operator must first displace away from the end of the hand grip with his thumb before the lever can be moved.

The pneumatic actuators 40, 41 are chosen to provide an operating force such that either of them alone is capable of causing the clutch 18 to engage. However it is advantageous to provide a duplicated system as described so that the operator can engage or disengage the clutch 18 using either one hand. This enables him to turn the mower more easily at the end of each traverse of the lawn being cut; it will be appreciated that to turn the mower sharply and quickly the operator is obliged to let go of the hand grip on the outside of the turn.

In addition to the foregoing advantages, the described embodiment avoids the need for a clutch cable which in use would be permanently in tension, and subject to frequent actuation, and thus likely to have only limited life. In the described embodiment the valves 68, 70 are integrated into their respective hand grips, together with the levers 82 and collar 86. During assembly, the lines 64, 74 and 66, 75 are passed down inside the handlebar tubes, and the hand grips are fixed to the ends of the handlebars by simple screw fixings. A convenient compact and tamper-proof arrangement results.

The cutter clutch is disengaged only occasionally, when the mower is to be moved without cutting. It therefore is operated conventionally by a cable in the described embodiment. If preferred however pneumatic actuation may be used, and the cable eliminated; a pneumatic actuator such as 40 would then be provided to disengage the clutch when necessary. A control valve equivalent to valve 68 would not need to be operator-presence-sensitive and would be arranged to be stable in both its first and second positions.

The smooth pneumatic control of the clutch 18 reduces the need for the operator to reduce the engine speed for tight turns. The clutch can be disengaged to achieve a controlled tight turn, and it follows that an infinitely variable engine speed control may not be necessary.

Two predetermined engine speeds are envisaged as sufficient:
- a starting and pedestrian-operated working speed; and
- a transport speed, namely a very brisk walking pace for motoring the mower when cutting is not required. This speed also is used if the mower has a ride-on trailing seat for the operator, enabling large grass areas to be cut quickly.

The two speeds are factory-set and are not adjustable by the operator when on the move. However selection between them conveniently can be done pneumatically, thereby enabling the mechanical throttle level 26 and its control cable to be dispensed with.

Referring to figure 5, in which already described parts carry the same reference numerals as in the other figures, a conventional butterfly throttle valve of the engine 16 is operated by a throttle lever 90, which is biased against an adjustable stop 94 by a spring 96. The stop sets the pedestrian-operated working speed of the mower. A second adjustable stop 98 sets the transport speed and the lever 90 thus is moveable between these two limits. A pneumatic actuator 100 similar to actuators 40, 41 is connected to the lever 90 and partial vacuum from the induction manifold 50 of the engine can be applied to its capsule 42 via lines 102, 104, non-return valve 106 and control valve 108. The valve 108 is internally the same as valve 68, and thus when moved from its first position to its second position it applies the partial vacuum in the inlet manifold to the actuator 100.

The actuator 100 pulls the throttle lever against its stop 98, and the engine is accelerated to its transport speed. A restrictor similar to 60 (figure 4) may be included in line 102 or 104 to ensure that the acceleration is not too abrupt. When the valve 108 is returned to its first position, the engine decelerates to its working speed.

An operating lever 110 for the valve 108 is not of the operator-presence-sensitive type, and includes a detent to hold the valve in its second position against the spring 78. Alternatively the spring 78 can be omitted provided that the lever 110 is provided with sufficient frictional resistance to hold it and the valve in the first and second positions.

The lever 110 can be integrated into one of the hand grips, and the lines 102, 104 taken down the handlebar tube 24 as already described for the pneumatic clutch control.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

## Claims

1. A grass-cutting machine comprising an internal combustion engine, means for obtaining a partial vacuum from the induction flow path of the engine, and means for utilising the partial vacuum to effect a control function during operation of the machine.

2. A grass-cutting machine comprising an internal combustion engine, and clutch means for selectively connecting the engine to at least one driven element of the machine, **characterised by** means for operating the clutch means using a partial vacuum generated in the induction flow path of the engine.

3. A grass-cutting machine as claimed in claim 2, wherein the at least one driven element comprises grass-cutting means of the machine.

4. A grass-cutting machine as claimed in claim 2, wherein the at least one driven element comprises ground wheels and/or a roller of the machine.

5. A grass-cutting machine as-claimed in claim 3, wherein the same clutch is used to connect the engine to the grass-cutting means and to wheels and/or a roller of the machine.

6. A grass-cutting machine as claimed in claim 2 comprising means for btaining the said partial vacuum from the inlet manifold of the engine.

7. A grass-cutting machine as claimed in claim 2 comprising means for utilising the partial vacuum gradually to achieve smooth engagement of the clutch means.

8. A grass-cutting machine as claimed in claim 2 comprising a pneumatic actuator for mechanically actuating the clutch means, and a valve for connecting the actuator either to the partial vacuum or to atmosphere.

9. A grass-cutting machine as claimed in claim 7 comprising a flow restrictor to cause gradual application of the partial vacuum to the pneumatic actuator.

10. A grass-cutting machine as claimed in claim 8, wherein the valve is biased to a position in which it connects the actuator to atmosphere, and comprising operator-actuated means for moving the valve to a further position in which it connects the actuator to the partial vacuum.

11. A grass-cutting machine as claimed in claim 8, wherein there are two said valves with respective operator manually-actuated means positioned to permit an operator of the machine to operate the valves separately, with each hand.

12. A grass-cutting machine as claimed in claim 11, wherein there are two said actuators arranged to activate the clutch means in parallel with each other, each controlled by a respective one of the said two valves.

13. A grass-cutting machine as claimed in claim 2 wherein the clutch means is normally disengaged.

14. A grass-cutting machine as claimed in claim 1 wherein the partial vacuum effects control of the engine throttle position.

15. A grass-cutting machine is claimed in claim 14 comprising a pneumatic actuator arranged to move the engine throttle between two fixed positions.

16. A grass-cutting machine as claimed in claims 2, being a lawnmower.

17. A grass-cutting machine as claimed in claim 11, wherein the operator actuated means are positioned on a handlebar of the machine.
